# EUROPÄISCHE PATENTANMELDUNG

(11) **EP 3 075 868 A1**
(43) Veröffentlichungstag der Anmeldung: **05.10.2016**
(21) Anmeldenummer: 15161594.5
(22) Anmeldetag: 30.03.2015
(51) Int. Cl.: C13B 50/02, A23P 10/00, A23G 3/56, A23L 5/00

(54) **VERFAHREN ZUM HERSTELLEN EINES AN EINEM HALTESTÜCK FESTGELEGTEN ZUCKERFORMSTÜCKS**

(71) Anmelder: August Töpfer Zuckerhandelsgesellschaft mbH & Co. KG, 20095 Hamburg (DE)
(72) Erfinder: Ernst, Rudolf, 20359 Hamburg (DE)
(74) Vertreter: Raffay & Fleck

(57) **Zusammenfassung**

Offenbart wird ein Verfahren zum Herstellen eines an einem Haltestück festgelegten Zuckerformstücks durch Verpressen von Kristallzucker um das Haltestück. Das Verfahren zeichnet sich erfindungsgemäß dadurch aus, dass eine ausschließlich aus Kristallzucker und einem Anteil Wasser zum Anfeuchten des Kristallzuckers bestehende Ausgangsmasse zusammen mit einem Abschnitt des Haltestücks, um den das Zuckerformstück gebildet und an dem das Zuckerformstück festgelegt werden soll, in eine Pressform eingelegt, unter Aufbringen von Druck verpresst, anschließend ausgeformt und zum Erhärten des Zuckerformstücks durch eine Wärmebehandlung getrocknet wird.

Bei den nach diesem Verfahren hergestellten Produkten ist das Zuckerformstück allein aus Saccharose gebildet und enthält keine weiteren Zusätze. Für die Herstellung des Zuckerformstücks sind auch ansonsten keine weiteren chemischen Zusätze erforderlich, und das Verfahren ist kostengünstig durchführbar.

## Beschreibung

Die vorliegende Erfindung betrifft ein Verfahren zum Herstellen eines an einem Haltestück festgelegten Zuckerformstücks durch Verpressen von Kristallzucker um das Haltestück mit den Merkmalen des Oberbegriffs des Anspruchs 1.

Es sind Zuckerprodukte bekannt, bei denen an Haltestücken, häufig Holzstäben, Kandiszucker festgelegt ist und die dem Süßen von Heißgetränken, insbesondere Tee, dienen. Diese Produkte erfreuen sich im Besonderen bei Teetrinkern hoher Beliebtheit, da das Haltestück zugleich zum Rühren des Getränks verwendet werden kann und der daran festgelegte Kandiszucker verglichen mit anderen Zuckerprodukten wie Streuzucker oder Würfelzucker eine lange Auflösezeit hat, seine Süße über einen langen Zeitraum an das Getränk abgibt. So löste sich in Versuchen des Erfinders ein typischer an einem Haltestück festgelegter Kandiskristall in einer zu Beginn des Versuchs ca. 80°C heißen 200 ml umfassenden Wassermenge in etwa 4 Minuten vollständig auf, wenn er fortwährend in dem Gefäß mit dem Wasser durch Rühren mit dem Haltestück bewegt wird. Wird der Kandis hingegen an einer Stelle ruhen gelassen, so dauert es bei gleichen Bedingungen 16 Minuten, bis der Kandiszucker an dem Haltestück vollständig aufgelöst war.

Derartige an Haltestücken festgelegte Kandiszucker sind aber in der Herstellung kostspielig und insoweit auch vergleichsweise teuer im Verkauf. Die Kosten der Herstellung sind dabei nicht bedingt durch den Rohstoff Zucker, sondern durch die Art und Weise, wie diese Produkte gewonnen werden. Denn hier wird der Zucker aus einer übersättigten Lösung direkt auf das Haltestück, in der Regel den Holzstab, als Kristall abgeschieden bzw. wächst dort auf. Ein entsprechender Kristallwachstumsprozess kann zwar technologisch gesteuert werden, bleibt jedoch stets ein lang andauernder Vorgang (dauert in der Regel mehrere Monate), so dass die Herstellung entsprechender Zuckerprodukte bereits aufgrund der sehr langen Produktionsdauer kostspielig ist.

Entsprechend gibt es Überlegungen, vergleichbare Zuckerprodukte, bei denen ein für das Süßen eines Getränkes nutzbares Zuckerformstück an einem Haltestück angeformt ist, auf andere Art und Weise zu bilden. Die am 30. September 1969 veröffentlichte US 3,469,997 beschreibt ein solches Verfahren, bei dem eine Mischung aus einem Hauptanteil an Rohrzucker (Saccharose) und einem deutlichen Zusatz an in Nadelform kristallisierendem Zucker, wie zum Beispiel Glukose oder Fructose, trocken, d.h. ohne Zusatz von Wasser, zusammen mit dem Haltestück in eine Form gegeben und durch Aufbringen von Druck in einer Presse zu dem Zuckerformstück verpresst wird. Die Pressform muss dabei mit einem Antihaftmittel besprüht werden, wofür in dieser Druckschrift Stearate genannt sind. Wenngleich mit diesem Verfahren Zuckerformstück an Haltestücken fest angeformt gebildet werden können, weist dieses Verfahren doch erhebliche Nachteile auf. Zum einen ist das so gewonnene Zuckerformstück nicht allein durch Kristallzucker (einem Zucker, der zu über 99,9% Saccharose enthält) gebildet, enthält viel mehr andere Zuckerarten, wie eben Fructose oder Glukose. Zum anderen erfordert die Herstellung die Verwendung von Antihaftmitteln, also Zusätzen, deren Verwendung bei der Lebensmittelherstellung zwar nicht verboten, jedoch jedenfalls kritisch zu betrachten ist.

Hier setzt die Erfindung an, deren Aufgabe es ist, ein alternatives Verfahren zum Herstellen eines an einem Haltestück festgelegten Zuckerformstücks anzugeben, bei dem das Zuckerformstück allein aus Saccharose gebildet ist und welches für die Herstellung des Zuckerformstücks keine weiteren chemischen Zusätze erfordert und welches kostengünstig durchführbar ist.

Diese Aufgabe wird erfindungsgemäß gelöst durch ein Verfahren zum Herstellen eines an einem Haltestück festgelegten Zuckerformstücks durch Verpressen von Kristallzucker um das Haltestück, welches sich dadurch auszeichnet, dass eine ausschließlich aus Kristallzucker und einem Anteil Wasser zum Anfeuchten des Kristallzuckers bestehende Ausgangsmasse zusammen mit einem Abschnitt des Haltestücks, um den das Zuckerformstück gebildet und an dem das Zuckerformstück festgelegt werden soll, in eine Pressform eingelegt, unter Aufbringen von Druck verpresst, anschließend ausgeformt und zum Erhärten des Zuckerformstücks durch eine Wärmebehandlung getrocknet wird.

Erfindungsgemäß werden als Ausgangsmaterialien für die Herstellung des durch Verpressen mit dem Haltestück gebildeten Zuckerformstücks ausschließlich Kristallzucker und diesem für ein Anfeuchten zugesetztes Wasser verwendet. Das so hergestellte Produkt ist also von höchster Reinheit, da es außer der den Kristallzucker zu über 99,9 % ausmachenden Saccharose und einem für das Befeuchten des Kristallzuckers beigemengten Anteil Wassers keine weiteren Zusätze enthält.

Dabei hat sich auch gezeigt, dass bei dem erfindungsgemäßen Verfahren die verwendeten Presswerkzeuge nicht etwa mit einem Antihaftmittel belegt werden müssen, wie dies das Verfahren nach der US 3,469,997 zwingend vorsieht. Das bei dem Verfahren nach der Erfindung nach dem Pressvorgang erhaltene Zuckerformstück an dem Haltestück lässt sich problemlos aus der nicht weiter vorbehandelten Pressform ausformen.

Da bei dem erfindungsgemäßen Verfahren insbesondere auch keine Bindemittel als Zusatzstoffe verwendet werden, ist der Pressling unmittelbar nach dem Pressvorgang zunächst sehr bruchempfindlich. Erst durch die gemäß der Erfindung vorzusehende Wärmebehandlung, die einer Trocknung des Zuckerformstücks dient, härtet dieses aus. Der Schritt der Wärmebehandlung ist also ein wesentlich wichtiger für den Erhalt des stabilen und bruchsicheren Produkts, des an dem Haltestück angeformten Zuckerformstücks.

Die Form der mit dem erfindungsgemäßen Verfahren hergestellten Zuckerformstücke kann insbesondere flexibel gewählt werden. Das Zuckerformstück sollte jedoch keine Hinterschnitte aufweisen, damit es aus der Pressform, z.B. aus einer Matrize, ausgeformt, z.B. gedrückt, werden kann. Es können bei dem Pressvorgang auch Prägungen in eine Ober- und/oder eine Unterseite des Zuckerformstücks eingebracht werden, z.B. Firmenlogos, Vereinssymbole, Tierkreiszeichenbilder oder dergleichen.

Der erfindungsgemäß eingesetzte Kristallzucker kann dabei aus jeglichem hierfür tauglichen pflanzlichen Ausgangsprodukt gewonnen sein, z.B. aus Zuckerrohr, Zuckerrüben oder dergleichen.

Dabei kann als Ausgangsmaterial für den Kristallzucker ein solcher mit üblicher Körnung, verwendet werden, der hier als "grobkörnig" bezeichnet wird. Ein solcher besteht üblicherweise aus Zuckerkörnern, von denen 90% Korngrößen (gemessen als Kantenlänge der typischerweise würfelförmigen Zuckerkristalle) zwischen 0,9 mm und 1,2 mm aufweisen. Allerdings zeigt sich, dass bei Verwendung von ausschließlich grobkörnigem Kristallzucker die Festigkeit der mittels dem erfindungsgemäßen Verfahren hergestellten, jeweils an einem Haltestück festgelegten Zuckerformstücke vergleichsweise gering ist, was zu kurzen Auflösezeiten des jeweiligen Zuckerformstücks in einem Heißgetränk führt.

Es hat sich insoweit als günstig erwiesen, dem Ausgangsmaterial neben einer Fraktion grobkörnigen Kristallzuckers auch einen Anteil an feinkörnigem Kristallzucker zuzugeben, der sich insbesondere dadurch auszeichnen kann, dass 90% seiner Zuckerkörner Korngrößen (wiederum gemessen als Kantenlänge der typischerweise würfelförmigen Zuckerkristalle) von unter 0,315 mm aufweisen. Dieser Anteil an feinkörnigem Kristallzucker, dies hat sich in Versuchen herausgestellt, wirkt bei der Verfestigung des Zuckerformstücks wie in Bindemittel und erhöht so die Festigkeit und damit auch die Auflösezeit des Zuckerformstücks in einem Heißgetränk. Die Erhöhung der Festigkeit nach dem Pressen hat auch eine positiven Einfluss auf die Ausschussrate, da die Bruchempfindlichkeit der Zuckerformstücke nach dem Pressvorgang und vor der Wärmbehandlung herabgesetzt wird.

Der Anteil des feinkörnigen Kristallzuckers an dem insgesamt eingesetzten Kristallzucker kann dabei grundsätzlich zwischen 0 Gew.-% (Verwendung von ausschließlich grobkörnigem Kristallzucker) und 100 Gew.-% (Verwendung ausschließlich von feinkörnigem Kristallzucker) liegen. Dabei ist dann wegen der aufgrund der größeren Oberfläche pro Gewichtseinheit erhöhten hygroskopischen Eigenschaft des feinkörnigen Kristallzuckers mit steigendem Anteil dieser Fraktion der Wasseranteil ebenfalls zu erhöhen, was dann wiederum zu längeren Trocknungszeiten und somit zu einem erhöhten Energieeinsatz führt. Es wird daher bevorzugt als Kristallzucker eine Mischung aus einer grobkörnigen und feinkörnigen Fraktion einzusetzen, in der die feinkörnige Fraktion einen Anteil von 10 Gew.-% bis 50 Gew.-%, vorzugsweise 15 Gew.-% bis 30 Gew.-%, besonders bevorzugt etwa 20 Gew.-% hat.

Gerade dann, wenn - jedenfalls in einem Anteil - besonders feiner, also feinkörniger Kristallzucker als Ausgangsmaterial Verwendung findet, so hat sich gezeigt, führt ein höherer Wasseranteil zu besseren Ergebnissen hinsichtlich der Festigkeit des am Ende des Verfahrens erhaltenen an dem Haltestück festgelegten Zuckerformstücks. Ein zu hoher Wasseranteil ist allerdings wiederum von Nachteil, da einerseits die zu verpressende Ausgangsmasse eine zu geringe Viskosität erlangt, nicht mehr durch das Verpressen vorverfestigt werden kann, andererseits aber auch, selbst wenn das Verpressen noch gelingt, eine ausgedehnte Wärmebehandlung für das erforderliche Trocknen vonnöten ist, was einen erheblichen Energiebedarf bedingt. Der Wasseranteil in der Ausgangsmasse kann insoweit mit Vorteil von 1,25 Gew.-% bis 3 Gew.-% betragen, vorzugsweise bei 2,5 Gew.-% eingestellt werden.

Für ein an einem Haltestück festgelegtes Zuckerformstück hat der Erfinder in Versuchen Auflösezeiten in bei Beginn des Versuchs ca. 80° heißem Wasser in einem Volumen von 200 ml ermittelt, die bei zwischen 30 s und 2 min (gerührt, und je nach Anteil an Wasser und Zusammensetzung des Kristallzuckers in der Ausgangsmischung) lagen und ungerührt ca. 6 min betragen haben. Diese Zeiten sind bedeutend länger als diejenigen von üblichen Zuckerformen, wie Streuzucker oder Zuckerwürfeln und gehen, wenn auch ohne diese zu erreichen, in Richtung der Auflösezeiten von vergleichbaren Produkten mit Kandiskristallen.

Es hat sich insbesondere gezeigt, dass mit dem erfindungsgemäßen Verfahren nicht nur weißer, also gebleichter Kristallzucker als Ausgangsbasis verwendet werden kann, sondern dass insbesondere auch brauner Zucker verarbeitet werden kann, der, da er von Natur aus klebriger und schlechter fließfähig ist, grundsätzlich in einem solchen Pressvorgang schwieriger zu verarbeiten ist als weißer Zucker. Diese Möglichkeit, auch braunen Kristallzucker zu verarbeiten, ist besonders wichtig, da somit die mit dem erfindungsgemäßen Verfahren hergestellten, an Haltestücken gebildeten Zuckerformstücke den im Handel befindlichen Kandisprodukten, die häufig auch braun gefärbt sind, angenähert werden können.

Erfindungsgemäß kann, wie gemäß einer vorteilhaften Weiterbildung des Verfahrens vorgesehen, dass Verpressen in der Pressform in wenigstens zwei Pressstufen erfolgt, wobei in einer ersten Pressstufe der in der Pressform befindliche, angefeuchtete Kristallzucker unter einem ersten Pressdruck vorverdichtet wird und wobei in einer zweiten Pressstufe unter einem gegenüber dem ersten Pressdruck deutlich erhöhten zweiten Pressdruck ein Endverdichten des in der Pressform befindlichen angefeuchteten Kristallzuckers erfolgt.

Das Vorverdichten bei niedrigem Pressdruck ermöglicht, dass der Raum um das in der Form von dem angefeuchteten Kristallzucker umgebene Halteteil zunächst homogen und frei von Lufteinschlüssen mit dem angefeuchteten Kristallzucker vollständig ausgefüllt wird. Erst wenn der angefeuchtete Kristallzucker im Pressraum homogen vorverdichtet ist, wird in dem zweiten Schritt der erhöhte zweite Pressdruck aufgebaut und das Zuckerformstück endverdichtet. Dies kann vorzugsweise mit einer kleinen Vorschubgeschwindigkeit eines verwendeten Pressstempels erfolgen. Dieser zweistufige Pressvorgang verhindert dabei insbesondere auch Verformungen des Haltestücks. Er vermeidet zudem eine ungleichmäßige Belastung der Presswerkzeuge und damit einen Bruch der Pressform.

Dabei ist es grundsätzlich auch möglich, ein gestaffeltes Befüllen der Pressformen mit der aus Kristallzucker und Wasser gebildeten Ausgangsmasse vorzusehen. So kann z.B. eine erste Menge der Ausgangsmasse vor einem Vorverdichten in die Pressform gefüllt werden, dann das Vorverdichten erfolgen und anschließend eine zweite Menge der Ausgangsmasse in die Pressform gefüllt und die gesamte Masse dann mit dem zweiten Pressdruck verpresst werden. Auf diese Weise kann die Pressform besser abgestimmt und genauer befüllt werden, eine homogenere Befüllung ist möglich. Auch lassen sich die Fertiggewichte der so erhaltenen Zuckerformstücke besser bestimmen und präziser einhalten. Schließlich ist bei einer solchen zweistufigen Befüllung der Pressform(en) die Gefahr geringer, dass ein Pressbär einer z.B. eingesetzten hydraulischen Presse verkantet.

Bei einer solchen Vorgehensweise des zweistufigen Befüllens der Pressform können auch unterschiedliche Ausgangsmassen für den ersten und den zweiten Befüllschritt eingesetzt werden, die sich in der Zusammensetzung des in der Ausgangsmasse vorhandenen Kristallzuckers und/oder dem Wasseranteil in der Ausgangsmasse und/oder der Körnung unterscheiden. So ist es insbesondere möglich auch Kristallzucker unterschiedlicher Farbe, z.B. in einem ersten Befüllschritt eine Ausgangsmasse mit weißen Kristallzucker, in einem zweiten Befüllschritt eine Ausgangsmasse mit braunem Kristallzucker zu verwenden, um so optisch ansprechende, mehrschichtige Zuckerformstücke zu erhalten.

Bei einem zweistufigen Verpressen gemäß der oben geschilderten Varianten kann der zweite Pressdruck von 550 bar bis 1 150 bar, vorzugsweise von 700 bar bis 750 bar, insbesondere 725 bar betragen. Der erste Pressdruck liegt dann typischerweise in einem Bereich zwischen 5% und 15% des zweiten Pressdruckes, bevorzugt bei 10% des zweiten Pressdruckes. Diese Druckbereiche haben sich als gut geeignet für die Herstellung homogener und haltbarer Zuckerformstücke an Haltestücken nach dem erfindungsgemäßen Verfahren erwiesen.

Insbesondere kann bei dem erfindungsgemäßen Verfahren ein Holz- oder Bambusstab als Haltestück verwendet werden, wobei das Zuckerformstück um den Holz- oder Bambusstab, insbesondere an einem seiner Enden, gebildet und an diesem festgelegt wird.

Mit Vorteil kann der Pressvorgang des erfindungsgemäßen Verfahrens in einer hydraulischen Presse mit einer ortsfesten Form und mit einer Bewegbarkeit und Bewegung (während des Arbeitsvorganges) eines Pressstempels und einer mit diesem verbundenen Matrize der Form ausschließlich entlang einer in der Pressrichtung verlaufenden Achse erfolgen, wobei die hydraulische Presse über eine programmierbare Steuerung mit vorgabbarer Vorschubgeschwindigkeit des Pressstempels, vorgebbarer Pressdauer, vorgebbarer Presskraft, und vorgebbarer Rückhubgeschwindigkeit einstellbar ist.

Gemäß dieser Weiterbildung wird für den Pressvorgang eine ortsfeste Form verwendet, Bewegungen von Presstempel und Matrize erfolgen nur in einer Achse, nämlich in Pressrichtung. Es kann dabei eine hydraulische Presse verwendet, deren Pumpen und Ventile über eine programmierbare elektronische Steuerung betätigt werden, so dass wie erwähnt die Vorschubgeschwindigkeit des Presstempels, die Pressdauer, die Presskraft und die Rückhubgeschwindigkeit frei einstellbar sind, dies vorzugsweise bei vergleichsweise großem Presshub.

Es können dabei mehrere Pressformen (typischerweise sechs bis zwanzig solcher Formen) in einer geraden Linie angeordnet und gleichzeitig betätigt werden. Bei einer solchen Anordnung mehrerer Pressformen entlang einer geraden Linie, sind erfindungsgemäß insbesondere zwei Bauformen denkbar:

Bei einer ersten Bauform ist ein für die Betätigung aller Presstempel zugleich wirkender, gemeinsamer hydraulischer Presszylinder vorgesehen. Die Verteilung des von dem Presszylinder ausgeübten Pressdrucks auf die Pressstempel erfolgt dann über einen Pressbären.

Bei einer alternativ möglichen zweiten Bauform ist für jeden Pressstempel jeweils ein eigener hydraulischer Presszylinder vorgesehen. Diese Bauform ist dadurch eine sehr aufwändige.

Die erste Bauform erlaubt es, den Bau der verwendeten hydraulischen Presse stark zu vereinfachen. Es besteht aber grundsätzlich die Gefahr, dass der Pressbär bei hohem Pressdruck verkantet und/oder die Formen ungleichmäßig belastet, wenn die Ausgangsmasse aus Kristallzucker und zum Anfeuchten desselben zugesetztem Wasser in den einzelnen Pressformen während des Pressvorganges unterschiedlich fließt und vorverdichtet wird. Formen- oder Pressenbruch können die Folge sein. Dem kann erfindungsgemäß durch den oben bereits beschriebenen zweistufigen Pressvorgang mit einem Vorverdichten in dem ersten Pressschritt und zudem durch eine berüttelte Befüllung der Pressformen mit der Ausgangsmasse verhindert werden.

Bei der Verwendung einer Hydraulikpresse mit mehreren über einen Pressbären von einem gemeinsamen Presszylinder betätigten Pressformen wird eine gerade Anzahl von Pressformen unter dem Pressbären bevorzugt.

Ferner wird bevorzugt, wenn Pressformen mit unterschiedlicher Formgebung für die Zuckerformstücke verwendet werden, diese unter dem Pressbären symmetrisch relativ zur Wirkachse des Presszylinders anzuordnen. Zudem werden, wenn Pressformen mit unterschiedlicher Formgebung für die Zuckerformstücke verwendet werden, diese insbesondere mit identischer Oberfläche gestaltet, so dass der Druckeintrag über den Pressbären gleichmäßig verteilt wird.

Um eine wie oben schon erwähnte berüttelte Befüllung der Pressformen zu erreichen, können die offenen Pressformen über einen beweglichen Rüttelkasten mit dem mit Wasser angefeuchteten Kristallzucker befüllt werden, wobei der Rüttelkasten für den Füllvorgang über die Pressformen geschoben werden kann, um diese in einem gemeinsamen Füllvorgang zu befüllen. Zu diesem Zweck können die Presstempel hydraulisch soweit angehoben werden, dass der Rüttelkasten frei über die Formen geführt und dort positioniert werden kann.

Zweckmäßigerweise können ein druckloses Heben und Senken der Presstempel zur Ermöglichung des Füllvorganges hydraulisch in einem Schnellgang mit hoher Fahrgeschwindigkeit ausgeführt werden.

Eine ortsfeste Ausführung der Pressformen erlaubt dabei die manuelle Einlage der Haltestücke, z.B. in Form von Holz- oder Bambusstäben, in die Pressformen vor Beginn des Füllvorganges. Wegen der manuellen Einlage kann eine in der Pressform für die Einlage des Haltestücks vorzusehende Öffnung, z.B. ein Schlitz, so eng gewählt werden, dass der Pressraum durch das Haltestück, z.B. den Holz- oder Bambusstab, abgedichtet wird und eine zusätzliche, bewegliche Abdichtung als Bestandteil der Pressform nicht erforderlich ist. Das Haltestück, z.B. der Holz- oder Bambusstab liegt außerhalb der Pressform lose auf, so dass es nicht herunterfällt. Es kann aber auch nach oben ausweichen ohne zu brechen, wenn der Pressdruck im Innern des Zuckerformstücks die Spitze des Haltestücks verschiebt. Die lose Auflage des Haltestücks wird dadurch ermöglicht, dass die Pressform ortsfest ist, und das Haltestück nicht für den Formtransport von Station zu Station einer mit mehreren Stationen arbeitenden Pressvorrichtung (wie z.B. in der US 3,469,997) gesichert werden muss.

Eine ortsfeste frei zugängliche Lage der Pressformen erlaubt die vorsichtige Entnahme des gepressten Zuckerformstücks aus der Presse. Die Zuckerformstücke werden nach dem Pressvorgang manuell oder über eine mechanische Vorrichtung entnommen und der Wärmebehandlung zum Trocknen zugeführt. Dazu können sie z.B. auf Hordenbleche gelegt und in einem stationären Ofen getrocknet werden. Sie können, wie oben bereits erwähnt, aber z.B. auch in einem Gitterbandofen wärmebehandelt werden.

Die Wärmebehandlung für das Trocknen der Zuckerformstücke kann insbesondere bei Temperaturen vonn 95°C bis 135°C , bevorzugt bei 98°C, erfolgen. Die Dauer der Wärmebehandlung kann vorzugsweise von 15 min bis 30 min betragen, wird insbesondere mit 20 min gewählt.

Ein typisches mit dem erfindungsgemäßen Verfahren hergestelltes Zuckerformstück an einem Haltestück wiegt typischerweise (ohne das Haltestück) von 8 g bis 12 g, z.B. etwa 11 g. Dabei wird für das Bilden des Zuckerformstücks, das ja nach der Wärmebehandlung und dem dort unternommenen weitgehend vollständigen Austreiben des eingangs des Verfahrens zugesetzten Wasseranteils, in der Ausgangsmasse Kristallzucker mit entsprechend gleichem Gewicht eingesetzt.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: einen Seitenschnitt durch eine Anordnung eines an ein stabförmiges Haltestück angeformten Zuckerformstücks in einer Werkzeuganordnung zum Pressformen nach dem erfindungsgemäßen Verfahren;
- Fig. 2: eine Aufsicht auf die in Fig. 1 gezeigte Anordnung;
- Fig. 3: eine Aufsicht auf ein nach dem erfindungsgemäßen Verfahren hergestelltes, an einem stabförmigen Haltestück angeformtes Zuckerformstück und
- Fig. 4: eine Seitenansicht des in Fig. 3 gezeigten an einem stabförmigen Haltestück angeformten Zuckerformstücks.

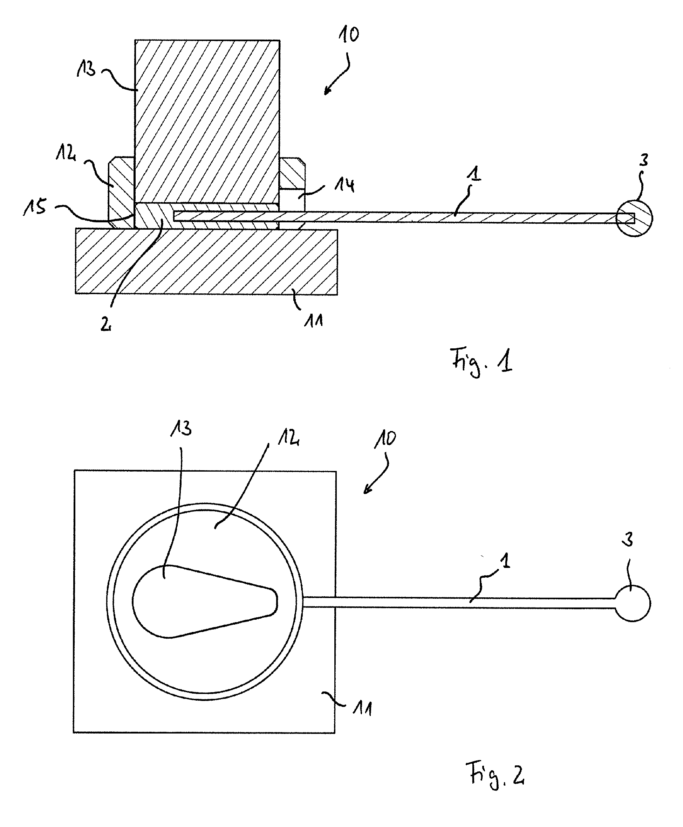

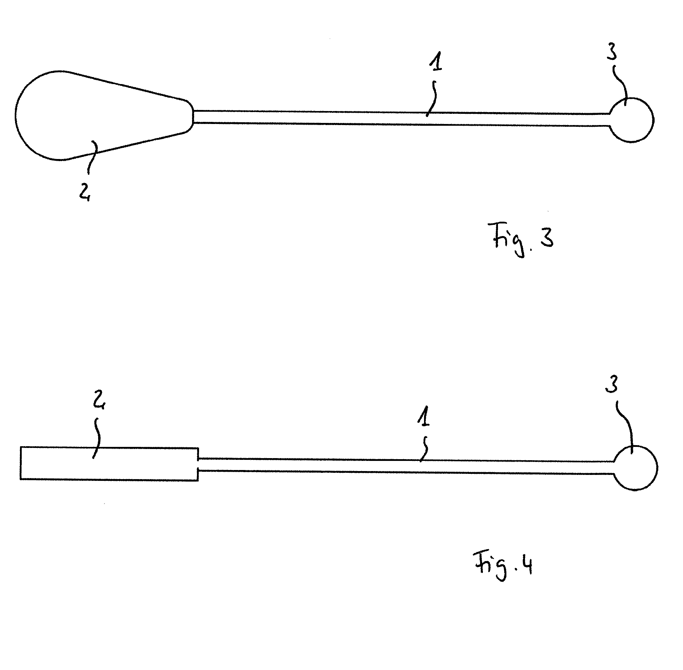

In den Figuren sind in schematischer Prinzipdarstellungen mögliche Ausgestaltungsformen einer für die Durchführung des erfindungsgemäßen Verfahrens zu verwendenden Werkzeuganordnung der Press- und Formwerkzeuge (Figuren 1 und 2) sowie eines mit dem erfindungsgemäßen Verfahren hergestellten an einem Haltestück festgelegten Zuckerformstücks (Figuren 3 und 4) gezeigt.

Die Figuren 1 und 2 zeigen in zwei Ansichten, einem Seitenschnitt und einer Ansicht von oben, eine Werkzeuganordnung 10, wie sie den Kern einer Pressvorrichtung, zum Beispiel einer hydraulischen Presse, bildet, mit der das erfindungsgemäße Verfahren in dem Schritt des Verpressens der Ausgangsmasse ausgeführt werden kann. Die Werkzeuganordnung 10 weist eine den Boden eines Pressraums 15 bestimmende Grundplatte 11, eine die seitliche Kontur eines Pressraumes 15 begrenzende Matrize 12 und einen die obere Begrenzung des Presseraumes 15 bildenden Pressstempel 13 auf. Pressstempel 13 und Matrize 12 sind in einer Pressrichtung, die in Figur 1 vertikal von oben nach unten verläuft, bewegbar. Der Pressstempel kann über eine Hydraulikpresse, in der diese Werkzeuganordnung 10 angeordnet ist, mit einem Pressdruck beaufschlagt werden. In der Matrize 12 ist ein Schlitz 14 gebildet, durch den ein stabförmiges Haltestück 1 mit einem zum Beispiel vorderen Ende in den durch die Grundplatte 11, die Matrize 12 und den Pressstempel 13 begrenzten Pressraum 15 eingelegt und in diesem geführt ist. In Figur 1 ist gut zu erkennen, dass in dem Pressraum 15 ein Zuckerformstück 2 gebildet ist, welches aus mit Wasser befeuchtetem Kristallzucker gebildet, durch den mittels des Pressstempels 13 ausgeführten Pressvorgang verdichtet und zu einem festen Körper geformt ist. Das Zuckerformstück 2 umgibt dabei das in dem Presseraum 15 gelegene vordere Ende des Haltestücks 1 und ist um dieses herum geformt und an diesem festgelegt. An einem dem vorderen, in dem Presseraum 15 befindlichen Ende gegenüberliegenden Ende ist an dem stabförmigen Haltestück 1 ein kugelförmiges Abschlussstück 3 angebracht, welches im wesentlichen ästhetischen Gesichtspunkten dient. Dies in den Figuren 1 und 2 gezeigten Werkzeuganordnung wird für die Durchführung des Pressvorganges des erfindungsgemäßen Verfahrens ortsfest in einer Hydraulikpresse eingesetzt, wobei die Bewegbarkeit des Presstempels 13 (und der Matrize 13, dies insbesondere zum Ausformen) nur in der Pressrichtung (und entgegen dieser) ermöglicht ist. Für das erfindungsgemäße Verfahren ist eine Behandlung der Presswerkzeuge mit einem Antihaftmittel nicht erforderlich, insbesondere auch nicht auf deren dem Pressraum 15 zugewandten Oberflächen.

In den Figuren 3 und 4 ist noch einmal die Anordnung aus dem an dem Haltestück 1 angeformten Zuckerformstück 2 und dem kugelförmige Abschlussstück 3 am anderen Ende des Haltestücks1 dargestellt, in Figur 3 in einer Aufsicht, in Figur 4 in einer Ansicht von der Seite. Hier ist zu erkennen, dass das so gebildete Zuckerformstück 2 paddelförmig gebildet ist. Diese hier gezeigte Form ist jedoch rein beispielhaft, es können auch ganz andere Formen, zum Beispiel kreisrunde Grundformen, Sternformen oder dergleichen gewählt werden. Hier ist eine Vielfalt von Formen realisierbar, allein beschränkt durch die Forderung einer zerstörungsfreien Ausformbarkeit des Zuckerformstücks 2 aus der Matrize 12 (vergleiche Figuren 1 und 2) nach dem Pressvorgang.

Das Zuckerformstück 2 ist dabei gebildet aus reinem Kristallzucker, also Saccharose, der durch Zusatz von Wasser angefeuchtet ist. Die so hergestellte Ausgangsmasse wird in die durch die Bodenplatte 11 und die Matrize 12 begrenzte Pressform durch einen Rüttelkasten eingebracht und anschließend durch Absenken und Andrücken des Pressstempels 13 verpresst. Das Verpressen erfolgt dabei zweistufig, wobei zunächst mit einem geringeren Pressdruck ein vorverdichten der Ausgangsmasse erfolgt, um so eine homogene Verteilung der Masse und ein vollständiges Ausfüllen der Form ohne Luftanschlüsse zu erreichen. Nach diesem ersten Schritt erfolgt das eigentliche Verpressen unter einem zweiten, deutlich erhöhten Pressdruck, in einem zweiten Schritt, in dem dann der angefeuchtete Kristallzucker zu dem Zuckerformstück 2 verdichtet wird. Nach dem Pressvorgang wird der Pressstempel 13 und wird auch die Matrize 12 angehoben, und das Zuckerformstück 2 aus der Matrize 12 gedrückt. Im Anschluss wird das so ausgeformte Zuckerformstück 2, welches nun an dem stabförmigen Haltestück 1 fest angeformt ist, einer Wärmebehandlung unterzogen, was zum Beispiel in einem feststehenden Ofen oder in einem Gitterbandofen erfolgen kann. Durch diese Wärmebehandlung trocknet das Zuckerformstück und erhält seine abschließende Festigkeit, auch gegen Bruch und für eine lange Auflösezeit in einem Heißgetränk.

In einem beispielhaften Fertigungsprozess wurden so in einer Hydraulikpresse an Haltestücken angeordnete Zuckerformstücke 2 hergestellt. Dabei waren in der Hydraulikpresse in einer in einer Längsrichtung hintereinander mehrere Pressformen angeordnet, die über einen von einem gemeinsamen Hydraulikstempel betätigten Pressbären unter verpresst werden konnten.

In der Ausgangsmasse wurde Kristallzucker eingesetzt, der zu 80 Gew.-% aus einer grobkörnigen Fraktion mit Korngrößen von 90% der in dieser Fraktion enthaltenen Zuckerkörner im Bereich von 0,9 mm bis 1,2 mm und zu 20 Gew.-% aus einer feinkörnigen Fraktion bestand. In der feinkörnigen Fraktion wiesen 90% der Zuckerkörner Korngrößen von unter 0,315 mm auf.

Weiterhin war in der Ausgangsmasse zum Anfeuchten Wasser in einem Anteil von 2,5 Gew.-% enthalten.

Weitere Inhaltsstoffe außer Kristallzucker und Wasser enthielt die Ausgangsmasse nicht.

Diese Ausgangsmasse wurde über einen Rüttelkasten in die Pressformen, in die zuvor Holzstäbe mit einem Ende eingelegt worden waren, verteilt, wobei pro Form eine etwas 11 g Kristallzucker enthaltende Menge der Ausgangsmasse eingefüllt wurde. Anschließend wurde der zweistufige Pressvorgang durchgeführt, bei dem in der ersten Pressstufe ein Druck von 72,5 bar, in der zweiten Pressstufe ein Druck von 725 bar aufgebracht wurde. Die Formen wurden nach dem Pressvorgang geöffnet und die an den Holzstäben angeformten Zuckerformstücke ausgeformt.

Der gesamte Presszyklus inklusive des Befüllens der Form mit der Ausgangsmasse dauerte dabei ca. 30 s.

Nach dem Pressen wurden die Zuckerformstücke in einem Trockungsofen für etwa 20 min einer Wärmebehandlung bei 98°C unterzogen, um das Wasser auszutreiben und den Formkörper weiter zu verfestigen.

Die so erhaltenen, an den Holzstäben angeformten Zuckerformstücke waren von hoher Festigkeit mit bruchfesten Kanten und erreichten in Versuchen in je 200 ml zu Versuchsbeginn 80°C heißem Wasser Auflösezeiten von bis zu 2 min (unter ständigem Rühren mit dem Holzstab) und bis zu 6 min (ohne Bewegung des Zuckerformstücks in dem Wasser).

### Bezugszeichenliste

- 1: Haltestück
- 2: Zuckerformstück
- 3: Abschlussstück
- 10: Werkzeuganordnung
- 11: Grundplatte
- 12: Matrize
- 13: Pressstempel
- 14: Schlitz
- 15: Pressraum

## Patentansprüche

1. Verfahren zum Herstellen eines an einem Haltestück festgelegten Zuckerformstücks durch Verpressen von Kristallzucker um das Haltestück, **dadurch gekennzeichnet, dass** eine ausschließlich aus Kristallzucker und einem Anteil Wasser zum Anfeuchten des Kristallzuckers bestehende Ausgangsmasse zusammen mit einem Abschnitt des Haltestücks, um den das Zuckerformstück gebildet und an dem das Zuckerformstück festgelegt werden soll, in eine Pressform eingelegt, unter Aufbringen von Druck verpresst, anschließend ausgeformt und zum Erhärten des Zuckerformstücks durch eine Wärmebehandlung getrocknet wird.

2. Verfahren nach Anspruch 1, **dadurch gekennzeichnet, dass** das Verpressen in der Pressform in wenigstens zwei Pressstufen erfolgt, wobei in einer ersten Pressstufe der in der Pressform befindliche, angefeuchtete Kristallzucker unter einem ersten Pressdruck vorverdichtet wird und in einer zweiten Pressstufe unter einem gegenüber dem ersten Pressdruck deutlich erhöhten zweiten Pressdruck ein Endverdichten des in der Pressform befindlichen angefeuchteten feinkörnigen Kristallzuckers erfolgt, wobei nach der ersten Pressstufe und vor der zweiten Pressstufe die Pressform mit einer weiteren Portion angefeuchteten Kristallzuckers, auch mit anderer Körnung und/oder Färbung des Kristallzuckers und/oder anderem Wasseranteil als diejenige des der ersten Pressstufe in die Pressform eingefüllten angefeuchteten Kristallzuckers, in die Pressform eingefüllt werden kann.

3. Verfahren nach Anspruch 2, **dadurch gekennzeichnet, dass** der zweite Pressdruck von 550 bar bis 1150 bar, vorzugsweise von 700 bar bis 750 bar, insbesondere 725 bar beträgt.

4. Verfahren nach einem der Ansprüche 2 oder 3, **dadurch gekennzeichnet, dass** der erste Pressdruck von 5% bis 15% des zweiten Pressdrucks beträgt, insbesondere bei 10% des zweiten Pressdrucks liegt.

5. Verfahren nach einem der vorhergehenden Ansprüche, **dadurch gekennzeichnet, dass** als Kristallzucker ein solcher verwendet wird, der eine feinkörnige Fraktion enthält, in der 90% der Kristallzuckerkörner eine geringere Korngrößen als 0,315 mm, gemessen als Kantenlänge des betrachteten Kornes, aufweisen.

6. Verfahren nach einem der vorhergehenden Ansprüche, **dadurch gekennzeichnet, dass** der Anteil der feinkörnigen Fraktion an dem für das Verfahren eingesetzten Kristallzucker zwischen 10 Gew.-% und 50 Gew.-% liegt, vorzugsweise zwischen 15 Gew.-% und 30 Gew.-%, insbesondere bei 20 Gew.-%.

7. Verfahren nach einem der vorhergehenden Ansprüche, **dadurch gekennzeichnet, dass** als Kristallzucker ein solcher verwendet wird, der eine grobkörnige Fraktion enthält, in der 90% der Kristallzuckerkörner Korngrößen zwischen 0,9 mm und 1,2 mm, gemessen als Kantenlänge des betrachteten Kornes, aufweisen.

8. Verfahren nach einem der vorhergehenden Ansprüche, **dadurch gekennzeichnet, dass** der Wasseranteil in der Ausgangsmasse von 1,25 Gew.-% bis 3 Gew.-%, vorzugsweise beträgt, vorzugsweise bei 2,5 Gew.-% liegt.

9. Verfahren nach einem der vorhergehenden Ansprüche, **dadurch gekennzeichnet, dass** als Kristallzucker ein ungebleichter, brauner Kristallzucker verwendet wird.

10. Verfahren nach einem der vorhergehenden Ansprüche, **dadurch gekennzeichnet, dass** als Haltestück ein Holz- oder Bambusstab verwendet wird.

11. Verfahren nach einem der vorhergehenden Ansprüche, **dadurch gekennzeichnet, dass** der Pressvorgang in einer hydraulischen Presse mit einer ortsfesten Form und mit einer Bewegbarkeit und Bewegung eines Pressstempels und einer mit diesem verbundenen Matrize der Form ausschließlich entlang einer in der Pressrichtung verlaufenden Achse erfolgt, wobei die hydraulische Presse über eine programmierbare Steuerung mit vorgebbarer Vorschubgeschwindigkeit des Pressstempels, vorgebbarer Pressdauer, vorgebbarer Presskraft, und vorgebbarer Rückhubgeschwindigkeit einstellbar ist.

12. Verfahren nach einem der vorhergehenden Ansprüche, **dadurch gekennzeichnet, dass** die Wärmebehandlung bei einer Temperatur von 95°C bis 135°C durchgeführt wird, vorzugsweise bei 98°C.

13. Verfahren nach einem der vorhergehenden Ansprüche, **dadurch gekennzeichnet, dass** die Wärmebehandlung für eine Dauer von 15 min bis 30 min, vorzugsweise von 20 min, durchgeführt wird.

14. Verfahren nach einem der vorhergehenden Ansprüche, **dadurch gekennzeichnet, dass** die Wärmebehandlung in einem stationären Ofen oder in einem Gitterbandofen erfolgt.

15. Verfahren nach einem der vorhergehenden Ansprüche, **dadurch gekennzeichnet, dass** das Gewicht des in der Ausgangsmasse enthaltenen Kristallzuckers zwischen 8g und 12g beträgt, vorzugsweise etwa 11g.
